# EUROPÄISCHE PATENTSCHRIFT

(11) **EP 2 771 605 B1**
(45) Veröffentlichungstag und Bekanntmachung des Hinweises auf die Patenterteilung: **11.01.2017**
(21) Anmeldenummer: 11776712.9
(22) Anmeldetag: 28.10.2011
(51) Int. Cl.: F16L 33/02, F16L 33/025, F16L 33/035

(54) **SCHLAUCHKLEMME**
HOSE CLAMP
COLLIER DE SERRAGE POUR TUYAU

(43) Veröffentlichungstag der Anmeldung: 03.09.2014
(73) Patentinhaber: Oetiker Schweiz AG, 8810 Horgen (CH)
(72) Erfinder: MIESSMER, Stefan, 8004 Zürich (CH)
(74) Vertreter: Strehl Schübel-Hopf & Partner
(86) Internationale Anmeldenummer: PCT/EP2011/005454
(87) Internationale Veröffentlichungsnummer: WO 2013/060346

(56) Entgegenhaltungen:
- EP-A2- 0 429 274
- CH-A5- 580 779
- JP-A- H11 223 287

## Beschreibung

### Stand der Technik

Eine offene Schlauchklemme mit den im Oberbegriff des Anspruchs 1 angegebenen Merkmalen ist aus US 4,299,012 bekannt. Die ohrartige Spanneinrichtung hat dort die Aufgabe, die Klemme in demjenigen gespannten Zustand zu halten, der ihr bei der Montage auf dem zu klemmenden Gegenstand erteilt wird.

Aus US 4,053,965 ist eine offene Schlauchklemme bekannt, bei der die Endabschnitte des Klemmbandes mit gezahnten Bereichen zum gegenseitigen Eingriff im überlappten Zustand versehen sind. Ein dort nicht näher erläuterter Clip dient dazu, die Endbereiche in Eingriff miteinander zu halten. Ein solcher Clip ist aus US 3,078,532 bekannt. In US 1,804,725 ist eine weitere Schlauchklemme beschrieben, bei der ein an der Außenseite einer Zunge vorgesehener erster gezahnter Bereich mit einem an der Innenseite eines erhabenen Bereichs ausgebildeten zweiten gezahnten Bereich zusammenarbeitet. Alle diese mit Zahneingriff arbeitenden Schlauchklemmen lassen sich bei der Montage durch Ziehen am freien äußeren Ende des Klemmbandes spannen.

Aus CH 580 779 A und JPH 11-223287 (Figur 12) ist eine Schlauchklemme nach dem Oberbegriff des Anspruchs 1 bekannt.

### Abriss der Erfindung

Der Erfindung liegt die Aufgabe zugrunde, Nachteile, wie sie bei vergleichbaren Schlauchklemmen nach dem Stand der Technik auftreten, mindestens teilweise zu beseitigen. Eine speziellere Aufgabe der Erfindung kann darin gesehen werden, eine Schlauchklemme anzugeben, die sich in einfacher Weise auf die gewünschte Haltekraft spannen lässt und diese Haltekraft im montierten Zustand sicher beibehält.

Die Lösung dieser Aufgabe gelingt mit der in Anspruch 1 definierten Schlauchklemme. Bei dieser dient die ohrartige Spanneinrichtung nur zum Spannen während der Montage, was automatisch oder manuell mit einem bei Ohrklemmen üblichen, beispielsweise zangenartigen Werkzeug erfolgen kann, mit dem sich auch hohe Haltekräfte ohne Weiteres erzeugen lassen. Im montierten Zustand werden die beim Spannen erzielten Haltekräfte von den dann ineinandergreifenden Verzahnungen aufgenommen, während das Ohr von Kräften entlastet wird. Da die Verzahnung, die wie eine Verriegelung wirkt, außerhalb des Ohrbereichs angeordnet ist, vermag die montierte Schlauchklemme ihre Funktion selbst dann noch sicher auszuüben, wenn das nach außen ragende Ohr beschädigt wird.

Die in Anspruch 2 angegebene Doppelverzahnung hat den Vorteil, dass zum Prägen der Zähne weniger Prägekraft benötigt wird.

In der Weiterbildung nach den Ansprüchen 3 bis 5 ergibt sich eine gut zu handhabende Schlauchklemme ohne gefährliches, nach außen vorstehendes Klemmbandende.

Die in Anspruch 6 genannte Schließeinrichtung bewirkt eine sichere gegenseitige Führung der beiden Klemmband-Endabschnitte in Bandlängsrichtung.

Die Ausgestaltung nach den Ansprüchen 7 und 8 dient dazu, einer Aufweitung der montierten Klemme, etwa infolge Materialermüdung, entgegenzuwirken.

Weitere Maßnahmen, die den praktischen Einsatz und die Handhabung der Schlauchklemme verbessern, sind in den Ansprüchen 9 bis 11 angegeben.

### Kurzbeschreibung der Zeichnungen

Ausführungsbeispiele der Erfindung werden nachstehend anhand der Zeichnungen näher erläutert. Darin zeigen:
Fig. 1 eine Seitenansicht einer Schlauchklemme gemäß einem ersten Ausführungsbeispiel im geschlossenen, aber noch nicht gespannten Zustand;
Fig. 2 und 3 perspektivische Darstellungen der Schlauchklemme nach Fig. 1, gesehen von entgegengesetzten Seiten;
Fig. 4 und 5 perspektivische Darstellungen der Schlauchklemme nach Fig. 1 im gestreckten Zustand, gesehen von der im geschlossen Zustand inneren bzw. äußeren Klemmbandseite;
Fig. 6 und 7 vergrößerte Draufsichten auf Teile der Schlauchklemme nach Fig. 1 bis 5;
Fig. 8 bis 10 Darstellungen ähnlich Fig. 1, 4 und 5 einer Schlauchklemme gemäß einer weiteren Variante;
Fig. 11 eine vergrößerte Ansicht eines Teils der in Fig. 10 gezeigten Schlauchkleme; und
Fig. 12 und 13 vergrößerte Darstellungen zur Erläuterung einer Einzelheit.

### Ausführungsbeispiele

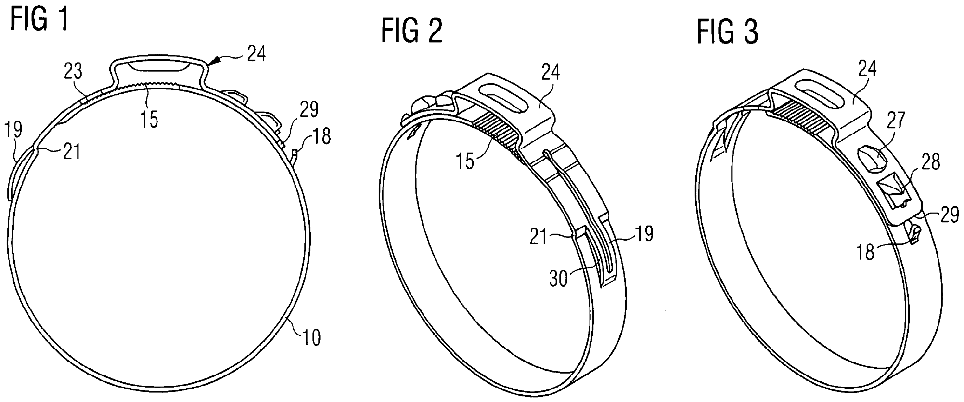

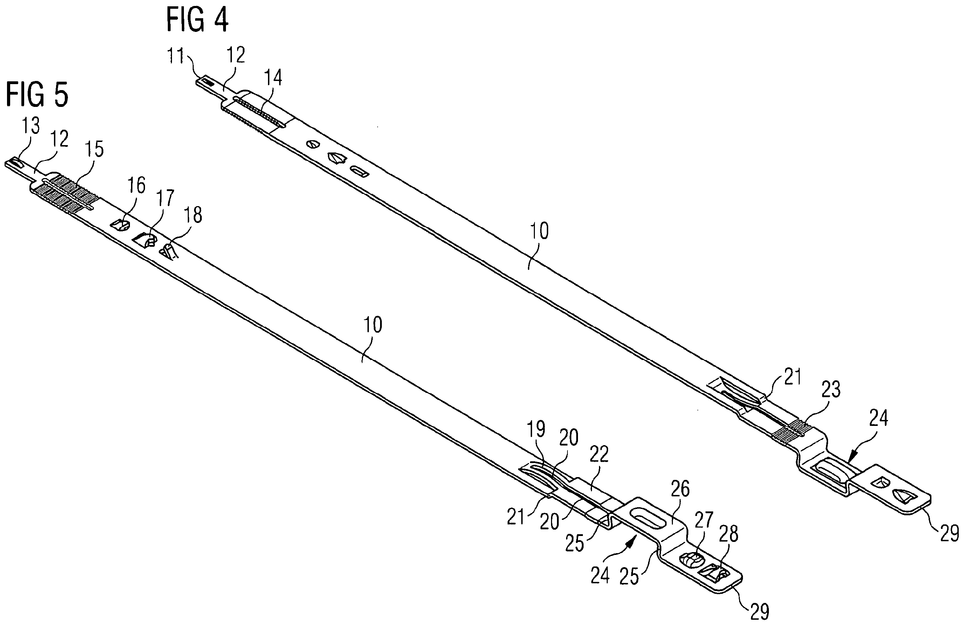

Die in Fig. 1 bis 7 gezeigte Schlauchklemme besteht aus einem Klemmband **10,** das, ausgehend von dem in Fig. 4 und 5 links oben dargestellten Ende **11,** folgende Element aufweist: eine Zunge **12,** deren Breite geringer ist als die volle Breite des Klemmbandes **10** und die eine Führungsnase **13** trägt, einen durch einen Längsschlitz **14** geteilten, in der Radialrichtung der geschlossenen Klemme nach außen weisenden ersten gezahnten Bereich **15,** einen Vorsprung in Form eines Stützhakens **16,** einen Führungshaken **17,** einen integrierten Sicherungshaken **18** gegen unbeabsichtigtes Öffnen der Klemme, einen aus dem Klemmband herausgewölbten Deckbereich **19** mit einem in Längsrichtung des Klemmbandes **10** verlaufenden Führungsschlitz **20,** einen am Ende des Deckbereichs **19** mit einer Stufe 21 anschließenden erhabenen Bereich **22,** in dem sich der Führungsschlitz **20** fortsetzt und der einen in der Radialrichtung der geschlossenen Klemme nach innen weisenden zweiten gezahnten Bereich **23** trägt, eine Spanneinrichtung **24** in Form eines sogenannten "Oetiker-Ohrs" **24** mit zwei in der Radialrichtung nach außen verlaufenden Schenkeln **25** und einem deren äußere Enden verbindenden Steg **26,** eine eine Stützhakenaufnahme **27** bildende Vertiefung, eine Führungshakenaufnahme **28** und ein äußeres Klemmbandende **29.**

Der im Bereich des ersten gezahnten Bereichs **15** vorhandene Längsschlitz **14** bedeutet, das die Prägekraft zum Ausbilden der Zähne kleiner gehalten werden kann.

Die im Lieferzustand geschlossene Schlauchklemme wird axial auf dem zu klemmenden Gegenstand, etwa einem Rohrnippel mit einem auf diesen aufgeschobenen Schlauchende, positioniert. Anschließend wird die Schlauchklemme durch Verengen des Ohrs **24** mit Hilfe eines automatischen oder manuellen Spannwerkzeugs, etwa einer an den beiden Schenkeln **25** ansetzenden Zange gespannt, wobei die beiden gezahnten Bereiche **15** und **23** in Eingriff gelangen. Dieser Eingriff bewirkt eine Verriegelung der Schlauchklemme im gespannten Zustand, in dem das nun außerhalb des Spannbereichs liegende Ohr **24** entlastet wird. Selbst eine Beschädigung des nach außen vorspringenden Ohrs hat dann keinen wesentlichen Einfluss mehr auf die Haltefunktion der Schlauchklemme.

In dem in Fig. 1 bis 3 dargestellten geschlossenen Zustand der Schlauchklemme befindet sich die auf dem inneren Klemmbandende **11** vorhandene Führungsnase **13** am Beginn des Führungsschlitzes **20** innerhalb des erhabenen Bereichs **22.** Während des Spannvorgangs schiebt sich die Zunge **12** in den Abschnitt unter dem Deckbereich **19,** wobei sie durch die darin vorhandene Fortsetzung des Führungsschlitzes **20** geführt bleibt, bis der anschließende Bereich voller Klemmbandbreite in die Nähe der Stufe **21** gelangt. In diesem Zustand ist der zu spannende Gegenstand im Wesentlichen über seinen gesamten Umfang lücken- und stufenlos von der vollen Bandbreite der Schlauchklemme umgeben.

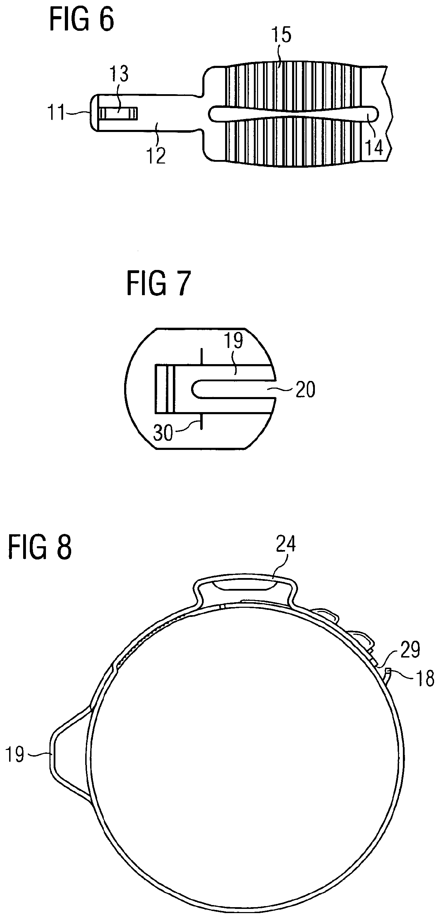

Wie in Fig. 2 und 7 dargestellt, kann das Klemmband seitlich von dem Deckbereich **19** an dem Führungsschlitz **20** eine Markierung **30** zur Positionsanzeige der Führungsnase **13** und damit zur sichtbaren Anzeige des Spannzustandes der Schlauchklemme tragen.

Das Ausführungsbeispiel nach Fig. 8 bis 10 unterscheidet sich von dem nach Fig. 1 bis 7 darin, dass der erste gezahnte Bereich **15** am inneren Klemmbandende auf der Zunge **12** ausgebildet ist und der zweite gezahnte Bereich **23** einen entsprechend größeren Abstand von dem Ohr **24** hat. Bei dieser Gestaltung, die sich vor allem für größere Klemmdurchmesser eignet, sind Spanneinrichtung (Ohr **24)** und Verriegelung (gezahnte Bereiche **15, 23)** gut voneinander entkoppelt, so dass eine unbeabsichtigte Entriegelung mit Sicherheit vermieden wird.

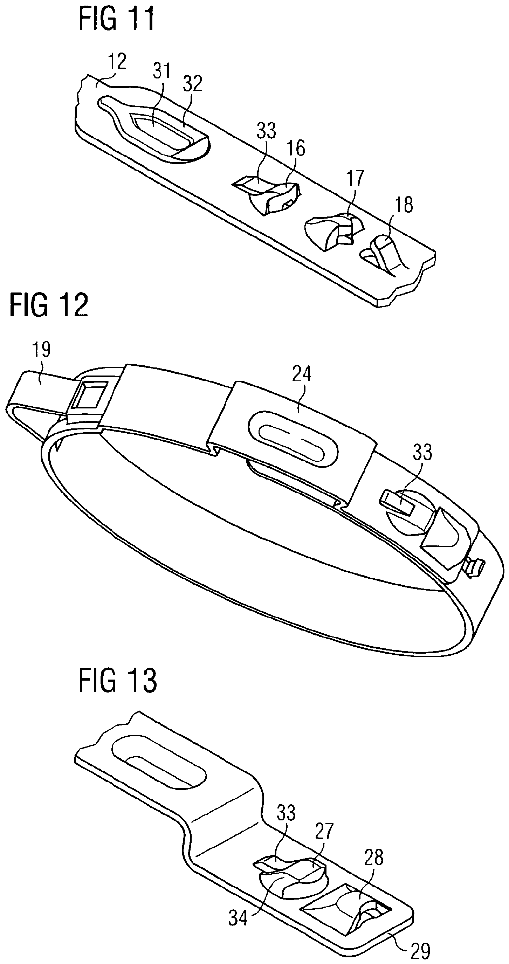

Ferner ist innerhalb des Spannbereichs des Klemmbandes **10** eine tropfenförmige, radial nach innen offene Vertiefung **31** vorgesehen, deren Rand vollständig innerhalb des Klemmbandes liegt und deren Breite von der in Bandlängsrichtung gemessenen Klemmbandmitte weg abnimmt. Wie bei dem Ausführungsbeispiel nach Fig. 11 gezeigt, kann der Rand der Vertiefung **31** durch eine umlaufende Sicke **32** verstärkt sein. Während der Spannbewegung der Schlauchklemme drückt sich Material des zu spannenden Gegenstands (Schlauchs) in die Vertiefung **31,** das bei entgegengesetzter Bewegung in den sich verjüngenden Teil der Tropfenform gezwängt wird und dadurch eine Bewegung in dieser Richtung hemmt. Somit wird einem Nachlassen des Spannzustandes, etwa aufgrund plastischer Verformung des Klemmbandes, entgegengewirkt.

Gemäß Fig. 8 bis 10 ist der Deckbereich **19** für die Zunge **12** stark aus dem Klemmband **10** herausgewölbt, um ein längeres Zungenende, das sich bei einem größeren Spannbereich ergibt, sicher aufzunehmen.

Bei der Variante nach Fig. 11 bis 13 ist der Stützhaken **16** mit einem Führungsfinger **33** versehen, der im geschlossenen Zustand der Schlauchklemme in eine zu dem Ohr **24** hin offene Aussparung **34** der Stützhakenaufnahme **27** eingreift. Dadurch lässt sich das innere Klemmbandende **11** auch ohne die bei dem ersten Ausführungsbeispiel auf der Zunge **12** vorhandene Führungsnase **13** in Umfangsrichtung der Schlauchklemme führen. Diese Ausgestaltung ist insbesondere bei dem Ausführungsbeispiel nach Fig. 8 bis 10 zweckmäßig.

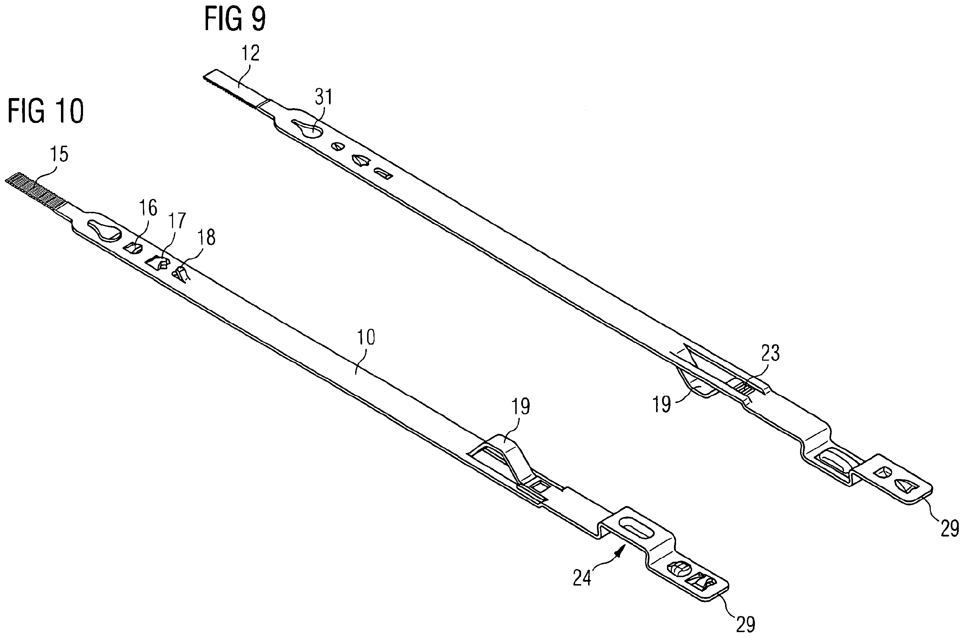

Das anhand von Fig. 1 und 7 erläuterte Merkmal (Markierung des Spannzustandes) kann bei allen oben beschriebenen Ausführungsbeispielen und Varianten vorgesehen sein. Ebenso ist die anhand von Fig. 11 bis 13 erläuterte Maßnahme zur Führung des inneren Klemmbandendes auch bei den Ausführungsbeispielen nach Fig. 1 bis 7 und 8 bis 10 anwendbar. Des Weiteren ist die Maßnahme nach Fig. 9, 10 und 11 (tropfenförmige Prägung) zur Verhinderung nachlassender Klemmwirkung bei allen Ausführungsbeispielen anwendbar.

### Bezugszeichen

- **10**: Klemmband
- **11**: inneres Klemmbandende
- **12**: Zunge
- **13**: Führungsnase
- **14**: Längsschlitz
- **15**: erster gezahnter Bereich
- **16**: Stützhaken
- **17**: Führungshaken
- **18**: Sicherungshaken
- **19**: Deckbereich
- **20**: Führungsschlitz
- **21**: Stufe
- **22**: erhabener Bereich
- **23**: zweiter gezahnter Bereich
- **24**: Ohr
- **25**: Schenkel
- **26**: Steg
- **27**: Stützhakenaufnahme
- **28**: Führungshakenaufnahme
- **29**: äußeres Klemmbandende
- **30**: Markierung
- **31**: Vertiefung
- **32**: Sicke
- **33**: Führungsfinger
- **34**: Aussparung

## Patentansprüche

1. Schlauchklemme aus einem Klemmband **(10)** mit einem inneren Endabschnitt und einem diesen überlappenden äußeren Endabschnitt, einer Schließeinrichtung **(16, 17, 27, 28),** die die beiden Endabschnitte im geschlossenen Zustand der Schlauchklemme in gegenseitigem Eingriff hält, und einer in dem Klemmband **(10)** vorgesehenen ohrartigen Spanneinrichtung **(24)** mit zwei nach außen ragenden Schenkeln **(25)** und einem diese verbindenden Steg **(26),** wobei der innere Endabschnitt auf seiner Außenseite einen ersten gezahnten Bereich **(15)** aufweist, der im gespannten Zustand der Schlauchklemme in einen an der Innenseite des äußeren Endabschnitts und auf der vom äußeren Klemmbandende **(29)** abgewandten Seite der Spanneinrichtung **(24)** angeordneten zweiten gezahnten Bereich **(23)** eingreift,
**dadurch gekennzeichnet, dass**
der innere Endabschnitt in einer Zunge **(12)** endet, deren Breite geringer ist als die volle Bandbreite und die im geschlossenen Zustand der Schlauchklemme eine in dem äußeren Endabschnitt vorgesehene Stufe **(21)** durchsetzt, und
der äußere Endabschnitt in einem an die Stufe **(21)** anschließenden Bereich einen die Zunge **(12)** außen abdeckenden Teil **(19)** aufweist

2. Schlauchklemme nach Anspruch 1, wobei mindestens einer der gezahnten Bereiche **(15, 23)** in einem durch einen Längsschlitz **(14)** zweigeteilten Klemmbandabschnitt ausgebildet ist.

3. Schlauchklemme nach Anspruch 1, wobei der erste gezahnte Bereich **(15)** auf der Zunge **(12)** ausgebildet ist.

4. Schlauchklemme nach einem der vorhergehenden Ansprüche, wobei die Schließeinrichtung **(16, 17, 27, 28)** mindestens eine auf dem äußeren Endabschnitt ausgebildete Vertiefung (27) und einen im geschlossenen Zustand der Schlauchklemme in diese eingreifenden Vorsprung **(16)** auf dem inneren Endabschnitt umfasst, wobei die Vertiefung **(27)** eine zu der Spanneinrichtung **(24)** hin offene Aussparung **(34)** zum Eingriff eines an dem Vorsprung **(16)** ausgebildeten Führungsfingers **(33)** aufweist.

5. Schlauchklemme nach einem der vorhergehenden Ansprüche, wobei das Klemmband **(10)** an seiner Innenseite in einem Bereich, der im gespannten Zustand auf dem Schlauch zu liegen kommt, eine Vertiefung **(31)** aufweist, deren Rand vollständig innerhalb des Klemmbandes **(10)** liegt und deren Breite von der in Bandlängsrichtung gemessenen Klemmbandmitte weg abnimmt.

6. Schlauchklemme nach Anspruch 5, wobei der Rand der Vertiefung **(31)** durch eine umlaufende Sicke **(32)** verstärkt ist.

7. Schlauchklemme nach einem der vorhergehenden Ansprüche, wobei die Zunge **(12)** eine Führungsnase **(13)** trägt, die in einen im äußeren Endabschnitt vorhandenen Führungsschlitz **(20)** eingreift.

8. Schlauchklemme nach Anspruch 7, wobei an dem Führungsschlitz **(20)** eine Markierung **(30)** zur Beobachtung des Schließzustandes der Schlauchklemme angebracht ist.

9. Schlauchklemme nach einem der vorhergehenden Ansprüche, wobei das Klemmband **(10)** an seiner Außenseite einen Sicherungshaken **(18)** für das äußere Klemmbandende **(29)** zur Vermeidung eines unbeabsichtigten Öffnens der Schlauchklemme trägt.

## Claims

1. A hose clamp made of a clamping band **(10)** having an inner end portion overlapped by an outer end portion, closing means **(16, 17, 27, 28)** for maintaining both end portions in mutual engagement in the closed condition of the hose clamp, and ear-like tightening means **(24)** provided in the clamping band **(10)** and having two outward extending legs **(25)** interconnected by a bridge portion **(26),** wherein the outer side of the inner end portion has a first toothed portion **(15)** which in the tightened condition of the hose clamp engages a second toothed portion **(23)** disposed on the inner side of the outer end portion and on the side of the tightening means **(24)** remote from the outer clamping band end **(29),**
**characterised in that**
the inner end portion terminates in a tongue **(12)** which has a width smaller than the full band width and which, in the closed condition of the hose clamp, extends through a step **(21)** provided on the outer end portion, and
the outer end portion has a part **(19)** covering the tongue **(12)** in an area adjoining the step **(21).**

2. The hose clamp of claim 1, wherein at least one of the toothed portions **(15, 23)** is formed in a part of the clamping band that is divided by a longitudinal slot **(14).**

3. The hose clamp of claim 1, wherein the first toothed portion **(15)** is formed on the tongue **(12).**

4. The hose clamp of any preceding claim, wherein the closing means **(16, 17, 27, 28)** has at least one depression **(27)** formed on the outer end portion and a projection **(16)** formed on the inner end portion and engaging the depression **(27)** in the closed condition of the hose clamp, the depression **(27)** having a cut-out **(34)** open toward the tightening means **(24)** for engaging a guide finger **(33)** formed on the projection **(16).**

5. The hose clamp of any preceding claim, wherein the inner side of the clamping bend **(10)** has a depression **(31)** which, in the closed condition, comes to lie on the hose, the periphery of which depression **(31)** is completely within the clamping band **(10)** and which has a width decreasing from the centre of the clamping band **(10)** in the longitudinal direction of the band.

6. The hose clamp of claim 5, wherein the periphery of the depression **(31)** is reinforced by a circumferential bead **(32).**

7. The hose clamp of any preceding claim, wherein the tongue **(12)** carries a guide nose **(13)** for engaging a guide slot **(20)** provided in the outer end portion.

8. The hose clamp of claim 7 including a marking **(30)** at the guide slot **(20)** for observing the closing condition of the hose clamp.

9. The hose clamp of any preceding claim, wherein the outer side of the clamping band **(10)** has a securing hook **(18)** for the outer clamping band end **(29)** to prevent any inadvertent opening of the hose clamp.

## Revendications

1. Collier de serrage pour tuyau constitué d'une bande de serrage (10) ayant une partie d'extrémité intérieure et une partie d'extrémité extérieure recouvrant celle-ci, un dispositif de fermeture (16, 17, 27, 28) qui maintient en prise mutuelle les deux parties d'extrémité lorsque le collier de serrage pour tuyau est à l'état fermé, et un dispositif de serrage (24) analogue à une oreille, prévus dans la bande de serrage (10) et ayant deux jambes (25) faisant saillie vers l'extérieur et une partie en pont (6) reliant celles-ci, dans lequel la partie d'extrémité intérieure comporte, sur son côté extérieur, une première zone dentée (15) qui vient en prise, lorsque le collier de serrage pour tuyau est à l'état serré, avec une seconde zone dentée (23) agencée sur le côté intérieur de la partie d'extrémité extérieure et sur le côté du dispositif de serrage (24) opposé à l'extrémité de bande de serrage extérieure (29),
**caractérisé en ce que**
la partie d'extrémité intérieure se termine par une languette (12) dont la largeur est plus petite que la largeur de bande complète et qui traverse, lorsque le collier de serrage pour tuyau est à l'état fermé, un gradin (21) prévu dans la partie d'extrémité extérieure, et
la partie d'extrémité extérieure comporte une partie (19) recouvrant extérieurement la languette (12) dans une zone adjacente au gradin (21).

2. Collier de serrage pour tuyau selon la revendication 1, dans lequel au moins une des zones dentées (15, 23) est formée dans une partie de bande de serrage divisée en deux par une fente longitudinale (14).

3. Collier de serrage pour tuyau selon la revendication 1, dans lequel la première zone dentée (15) est formée sur la languette (12).

4. Collier de serrage pour tuyau selon l'une des revendications précédentes, dans lequel le dispositif de fermeture (16, 17, 27, 28) comporte, sur la partie d'extrémité intérieure, au moins un évidement (27) formé sur la partie d'extrémité extérieure et une saillie (16) en prise avec celui-ci lorsque le collier de serrage pour tuyau est à l'état fermé, dans lequel l'évidement (27) comporte une cavité (34) débouchant vers le dispositif de serrage (24) pour venir en prise avec un doigt de guidage (33) formé sur la saillie (16).

5. Collier de serrage pour tuyau selon l'une des revendications précédentes, dans lequel la bande de serrage (10) comporte, sur son côté intérieur, dans une zone qui vient à être sur le tuyau à l'état serré, un évidement (31) dont le bord se situe entièrement à l'intérieur de la bande de serrage (10) et dont la largeur diminue à partir du centre de la bande de serrage mesuré dans la direction longitudinale de la bande.

6. Collier de serrage pour tuyau selon la revendication 5, dans lequel le bord de l'évidement (31) est renforcé par une nervure circonférentielle (32).

7. Collier de serrage pour tuyau selon l'une des revendications précédentes, dans lequel la languette (12) supporte un nez de guidage (13) qui vient en prise dans une fente de guidage (20) située dans la partie d'extrémité extérieure.

8. Collier de serrage pour tuyau selon la revendication 7, dans lequel un marquage (30) est appliqué sur la fente de guidage (20) pour observer l'état de fermeture du collier de serrage pour tuyau.

9. Collier de serrage pour tuyau selon l'une des revendications précédentes, dans lequel la bande de serrage (10) supporte, sur son côté extérieur, un crochet de fixation (18) pour l'extrémité de bande de serrage extérieure (29) afin d'éviter une ouverture involontaire du collier de serrage pour tuyau.
